# EUROPEAN PATENT APPLICATION

(11) **EP 4 785 828 A1**
(43) Date of publication of application: **05.08.2026**
(21) Application number: 25206974.5
(22) Date of filing: 06.10.2025
(51) Int. Cl.: A47C 16/02, A47B 9/16, A47B 23/04

(54) **SUPPORT SYSTEM HAVING PLATFORM WITH CONTINUOUS HEIGHT ADJUSTMENT**

(30) Priority: 29.01.2025 NL 2039707
(71) Applicant: OAHWIP B.V., 5261 BC Vught (NL)
(72) Inventor: VAN HOOFT, Jan Thomas Lambertus, 5261 BC Vught (NL); ZIJLSTRA, Tjalke Jaddai, 5261 BC Vught (NL)
(74) Representative: V.O.

(57) **Abstract**

A support system (100) comprises a base (10), a platform (30), and a scissor structure (20) configured to support the platform (30) with the external load (L) at an adjustable height (Z) above the base (10). The scissor structure (20) comprises a first pivotable arm (21) and a second pivotable arm (22), each having one stationary end portion pivotably mounted to a respective stationary hinge (13,33) and one moveable end portion pivotably mounted to a respective guided element (32,12). The guided elements are moveable along guidance directions (31d,11d) of respective guidance structures (31,11) on the platform (30) and base (10). A clamping mechanism (40) controllably fixates the adjustable height (Z) by clamping onto an elongate adjustment member (41) connected to a moveable portion (21u,221) of the scissor structure (20).

## Description

### TECHNICAL FIELD AND BACKGROUND

The present invention relates to support systems, such as footrests, with a height adjustable platform. Adjustable platforms may be used for ergonomic applications, where user-specific height positioning is desired. For example, such platforms may allow users to customize height settings to improve comfort, accessibility, and functional efficiency.

As background, WO 2022/035310 A1, by the present inventor, discloses a height adjustable footrest. The known footrest features a footplate that can be raised or lowered using a scissor structure with first and second arms that pivot at a central hinge. This scissor structure connects to the footplate at its upper end and to a base at its lower end, forming an adjustable support mechanism. Specifically, the first and second arms are hinged to each other at the central hinge, allowing them to pivot around an axis perpendicular to the arms. The arms are also hinged to the footplate and the base at upper and lower hinge axes, respectively. This configuration enables height adjustment by altering the distance between the footplate and base as the arms pivot, thus allowing the footplate to move upward or downward.

To facilitate controlled movement of the arms, the known footrest employs movable hinge members connected to guide rods along the footplate and base. The upper and lower portions of the scissor arms are connected to the footplate and base through the movable hinge members, which attach to the ends of each arm. This arrangement enables each arm to shift toward or away from the central hinge as the scissor structure expands or contracts. The upper movable hinge members connect the guided end of the second arm to the footplate, while the lower movable hinge members connect the first arms to the base. To guide this movement, upper guide rods are mounted near the footplate and lower guide rods near the base, ensuring that the hinge members move along a stable path.

The height adjustment of the known footrest is itself controlled by an elongate adjustment member positioned near the upper portion of the scissor structure, which holds the guided end portions of the scissor arms at a set distance from each other, thereby determining the footplate height. This adjustment member pivots between an upper (engaged) position, where it locks the footplate at a specific height, and a lower (disengaged) position, where it allows the footplate to be repositioned. The adjustment member is connected pivotably to one of the arms, and aligns with a fixed anchoring member located near one of the upper hinge axes of the scissor structure. The anchoring member remains stationary and includes a series of openings, each corresponding to a specific height setting. When the adjustment member is in its upper position, one of its row of teeth engages with an opening in the anchoring member, locking the footplate securely at the desired height. Each opening in the anchoring member thus represents a specific height setting.

To initiate a height adjustment, the known footrest is equipped with an operating member, in particular a foot-operable knob, projecting upward from the footplate for convenient user access. The operating member is connected to the adjustment member and moves between an uppermost position, where it locks the height, and a depressed position, where it allows adjustment. When pressed, the operating member forces the adjustment member from its upper position to its lower position, disengaging it from the anchoring member and releasing the footplate for repositioning. Once the footplate is adjusted to the desired height, releasing the operating member allows a spring attached to the anchoring member to push the adjustment member back to its upper position. This re-engages the adjustment member's teeth with the openings in the anchoring member, securely locking the footplate at the new height.

The row of teeth on the adjustment member of the known footrest extends longitudinally along its length, aligning with the series of openings in the anchoring member. An upwardly facing contact surface on the adjustment member engages with a projection of the operating member, allowing the adjustment member to be pushed down and disengaged from the anchoring member when the operating member is pressed. Once the user releases the operating member, the spring action returns the adjustment member to its engaged position, with the teeth locking securely into the nearest opening at the selected height. This discrete mechanism, supported by the guide rods and movable hinge members, provides stable height settings, but may restrict adjustment to the specific increments defined by the anchoring member's openings, rather than allowing for continuous height variation.

There remains a desire for further improvements of adjustable support platforms, such as footrests. In particular, there is a desire for an easily operable support system which allows for continuous height adjustment of its support platform while maintaining secure and reliable locking at any desired height.

### SUMMARY

Aspects of the present invention can be embodied as a support system having a base configured to be placed on an external surface, a platform configured to support an external load, and a scissor structure configured to support the platform with the external load at an adjustable height above the base. The scissor structure comprises a first pivotable arm having a stationary lower end portion pivotably mounted to a stationary lower hinge on the base and a moveable upper end portion pivotably mounted to an upper guided element, which is moveable along a guidance direction of an upper guidance structure on the platform. The scissor structure further comprises a second pivotable arm having a stationary upper end portion pivotably mounted to a stationary upper hinge on the platform, and a moveable lower end portion pivotably mounted to a lower guided element which is moveable along a guidance direction of a lower guidance structure on the base.

By providing a clamping mechanism configured to controllably fixate the adjustable height by controllably clamping onto an elongate adjustment member connected to a moveable portion of the scissor structure, the invention may enable continuous height adjustment while maintaining secure and reliable locking at any desired height. As described herein, a self-reinforcing clamping mechanism, where increased load enhances the clamping force, may enable the use of a elongate adjustment member without requiring discrete substructures, e.g. gripping structures such as notches or protrusions, while maintaining reliable position holding under varying loads. Preferably, the elongate adjustment member has a relatively smooth surface for facilitating smooth operation, or possibly a roughened surface for further enhanced grip, while providing stepless adjustment either way.

According to the invention, the clamping mechanism can controllably switch between a clamping configuration and a release configuration, providing precise control over height adjustment. In the clamping configuration, at least one clamping member clamps onto the elongate adjustment member through a respective aperture, thereby fixating the moveable portion and the adjustable height of the scissor structure. The effectiveness of the clamping mechanism may be enhanced by a pivotable connection of the clamping member via a respective hinge axis to a mounting plate, where opposing clamping edges of the respective aperture engage with the elongate adjustment member.

Most preferably, the clamping mechanism comprises first and second clamping members configured to clamp in opposite directions, preventing unintended movement both upward and downward. By incorporating a clamp biasing member configured to bias the clamping mechanism towards the clamping configuration, the system may achieve quick and reliable position holding. Furthermore, a limited angular range of the clamping members between the release and clamping configurations may further improve immediate control.

In preferred embodiments, the clamping mechanism is fixated to the platform while the elongate adjustment member is connected to the moveable upper end portion of the first pivotable arm. By incorporating at least one tensioning member configured to bias upward movement of the platform away from the base during release configuration, the system may achieve effortless height adjustment while maintaining precise control through an operating member that engages with abutment surfaces of the clamping members.

The invention can be particularly advantageously embodied as a footrest, wherein the platform comprises a footplate with specific materials and profiles to support a user's feet and prevent slipping. A centrally arranged foot-operable knob, combined with the tensioning member exerting greater upward force than the minimum operating force, may enable intuitive height adjustment in both directions while maintaining secure positioning at any desired height.

### BRIEF DESCRIPTION OF DRAWINGS

These and other features, aspects, and advantages of the apparatus, systems and methods of the present disclosure will become better understood from the following description, appended claims, and accompanying drawing wherein:
FIGs 1A - 1C illustrate an adjustable support system arranged at different heights;
FIGs 2A and 2B illustrate operation of a clamping mechanism for fixating the height of the support system;
FIGs 3A and 3B illustrate aspects of the support system embodied as a footrest;
FIGs 4A and 4B illustrate further details of the support system and clamping mechanism.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

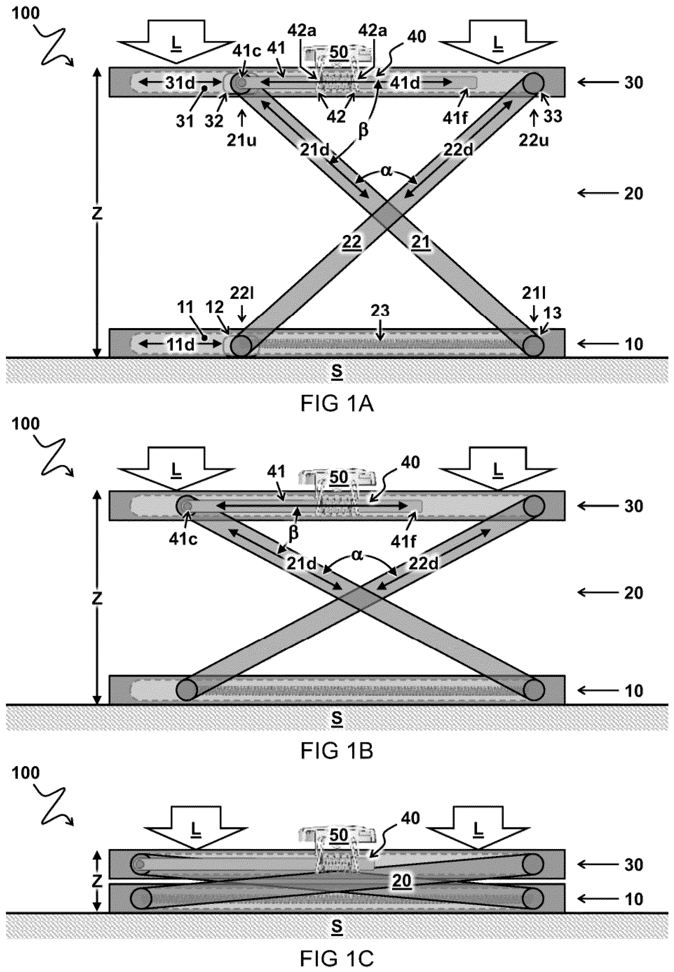

FIGs 1A - 1C illustrate an adjustable support system 100 arranged at different heights Z. The support system 100 comprises a base 10 configured to be placed on an external surface S. The support system 100 comprises a platform 30 configured to support an external load L. In a preferred embodiment, where the support system 100 is embodied as a footrest, the base 10 may be placed on a floor surface and the platform 30 may be configured to support a user's feet above the floor. In principle, also other embodiments may be envisaged. For example, the support system 100 may be embodied as a monitor stand configured to support a monitor at an adjustable height on a table.

The support system 100 comprises a scissor structure 20 configured to support the platform 30 with the external load L at an adjustable height Z above the base 10. The scissor structure 20 comprises at least a first pivotable arm 21 and a second pivotable arm 22. The first pivotable arm 21 has a stationary lower end portion 21l pivotably mounted to a stationary lower hinge 13 on the base 10, and a moveable upper end portion 21u pivotably mounted to an upper guided element 32 which is moveable along a guidance direction 31d of an upper guidance structure 31 on the platform 30, i.e. on the side of the platform relative to the scissor structure 20 (e.g. directly below or in the platform). The second pivotable arm 22 has a stationary upper end portion 22u pivotably mounted to a stationary upper hinge 33 on the platform 30, and a moveable lower end portion 22l pivotably mounted to a lower guided element 12 which is moveable along a guidance direction 11d of a lower guidance structure 11 on the base 10.

As described herein, the support system 100 comprises a clamping mechanism 40. The clamping mechanism 40 is configured to controllably fixate the adjustable height Z of the platform 30 above the base 10. In particular, the adjustable height Z is fixated by controllably clamping onto an elongate adjustment member 41. In principle, the elongate adjustment member 41 may be connected to any moveable portion of the scissor structure 20, which is moveably (at least when clamping is released) with respect to rest of the structure or frame (to which the clamping mechanism 40 itself is connected). Preferably, the clamping mechanism 40 is arranged in a fixed position relative to the moveable portion to which the elongate adjustment member 41 is connected. For example, the clamping mechanism 40 may be connected to the platform 30 or base 10. When adjusting the height Z and/or distance between the platform 30 and the base 10, the elongate adjustment member 41 may thus move relative to the fixed position of the clamping mechanism 40. By preventing movement of the elongate adjustment member 41, the clamping mechanism 40 may prevent movement of said moveable portion and thereby fixate the position of the entire scissor structure 20.

In one embodiment, e.g. as shown, the elongate adjustment member 41 has a connected end 41c and a free end 41f. Preferably, the connected end 41c of the elongate adjustment member 41 is pivotably mounted to the moveable portion 21u,22l of the scissor structure 20. By keeping the free end 41f unconnected, the direction of the elongate adjustment member 41 may essentially be determined by the relative position of the clamping mechanism 40 with respect to the moveable portion 21u,22l of the scissor structure 20, where the connected end 41c is pivotably connected. Depending on the adjustable height Z of the platform 30 above the base 10, the scissor angle "α" between the respective length directions 21d, 22d of the pivotable arms 21,22 may vary. Similarly, the member pivot angle "β" of the elongate adjustment member 41, e.g. between the length direction 41d of the elongate adjustment member 41 and the length direction 21d of the first pivotable arm 21, may vary depending on the adjustable height Z. Furthermore, there may be a small variation of the member pivot angle "B" to allow tolerance for relative movement of one or more moveable clamping members 42 in the clamping mechanism 40.

Preferably, the connected end 41c of the elongate adjustment member 41 is pivotably mounted to the moveable upper end portion 21u of the first pivotable arm 21. Alternatively, the connected end 41c of the elongate adjustment member 41 may be pivotably mounted to the moveable lower end portion 22l of the second pivotable arm 22. Accordingly, the connected end 41c of the elongate adjustment member 41 is configured to move (with the respective guided element 32,12 corresponding to the moveable end portion 21u,22l to which the connected end 41c is connected) along the respective guidance direction 31d,11d. As will be appreciated, the moveable upper end portion 21u of the first pivotable arm 21 and the moveable lower end portion 22l of the second pivotable arm 22 , undergo a relatively large amount of movement when the height Z of the platform 30 is adjusted, e.g. compared to the middle part. Without being bound by theory, it may be noted that the amount of clamping force needed to stop a relatively large amount of movement may be relatively lower, than if the elongate adjustment member 41 were connected to any other moving part of the scissor structure 20 with lower amount of movement. Accordingly, the clamping mechanism 40 may be function more reliably.

Preferably, the clamping mechanism 40 is fixated to the platform 30 and the elongate adjustment member 41 is connected to the moveable upper end portion 21u of the first pivotable arm 21. Alternatively, it can be envisaged that the clamping mechanism 40 is fixated to the base 10 and the elongate adjustment member 41 is be connected to the moveable lower end portion 22l of the second pivotable arm 22.

Preferably, the clamping mechanism 40 comprises at least one clamping member 42 forming a respective aperture 42a. The elongate adjustment member 41 is guided (along its length direction 41d) through the respective aperture 42a. The at least one respective clamping member 42 is configured to allow or prevent passage of the elongate adjustment member 41 through the respective aperture 42a by controllably clamping onto the elongate adjustment member 41.

In one embodiment, e.g. as shown, the elongate adjustment member 41 has a respective length direction 41d arranged at a variable member pivot angle "B" with respect to an arm direction 21d,22d of the respective pivotable arm 21,22 with the respective moveable end portion 21u,22l to which the elongate adjustment member 41 is connected. The pivotable connection 41c of the elongate adjustment member 41 is configured to move along with the moveable end portion 21u,22l of the respective pivotable arm 21,22 thereby moving along its length direction 41d passing through the clamping mechanism 40.

Preferably, the length direction 41d of the elongate adjustment member 41 is held by the clamping mechanism 40 substantially parallel to the respective guidance direction 31d,11d along which the respective moveable end portion 21u,22l to which the elongate adjustment member 41 is connected. Accordingly, the elongate adjustment member 41 is configured to move through the clamping mechanism 40 along the respective guidance direction 31d,11d while adjusting the height Z of the platform 30. In principle, the elongate adjustment member 41 may also be oriented in a different direction and/or move along another direction having at least a component along the length direction 31d of the first guidance structure 31

Preferably, the elongate adjustment member 41 is held between the respective moveable end portion 21u,22l and the stationary end portion 22u,21l. Most preferable, the elongate adjustment member 41 is held by the clamping mechanism 40 pointing from the respective moveable end portion 21u,22l (to which it is connected) to the stationary end portion 22u,21l (to which it is not connected). In this way, the elongate adjustment member 41 may be kept aligned and hidden along the respective guidance structure 31,11.

Preferably, the support system 100 comprises at least one tensioning member 23, configured to bias upward movement of the platform 30 away from the base 10 while the clamping mechanism 40 is maintained in a release configuration . For example, the tensioning member 23 may comprise a tensioned spring, or other tensioning means. In some embodiments, at least one tensioning member, is arranged in the upper guidance structure 31, held tensioned between the upper guided element 32 and the position of the stationary upper hinge 33, configured to apply a biasing force that tends to move the moveable upper end portion 21u of the first pivotable arm 21 towards the stationary upper end portion 22u of the second pivotable arm 22. In other or further embodiments, at least one tensioning member, such as a tensioned spring, is arranged in the lower guidance structure 11, held tensioned between the lower guided element 12 and the position of the stationary lower hinge 13, configured to apply a biasing force that tends to move the moveable lower end portion 22l of the second pivotable arm 22 towards the stationary lower end portion 21l of the first pivotable arm 21.

While not visible in the current figure, there are typically two upper guidance structures 31 on either side of the moveable upper end portion 21u, and two lower guidance structure 11 on either side of the moveable lower end portion 22l. Most preferably tensioning members are arranged in each of the upper guidance structures 31 and lower guidance structures 11. Accordingly, a relatively large force may be created that helps to lift the platform 30, even while pushing the operating member 50.

Preferably, an operating member 50, formed as a button, is arranged on top of the platform 30 and configured to control operation of the clamping mechanism 40. In one embodiment, the clamping mechanism 40 is configured to release clamping when the button is being actively pushed by at least a minimum downward operating force. In another or further embodiment, the clamping mechanism 40 is biased to reengage clamping when the button is released. Most preferably, the at least one tensioning member 23 is configured to exert a greater upward force on the platform 30 than the minimum downward operating force required to release the clamping mechanism 40. Advantageously, a user may thus easily raise the platform by applying the minimum required downward force on the button, while the platform itself is being pushed upward by the greater force exerted by the tensioning member 23. Additionally, the user may easily lower the platform by increasing the applied downward force on the button to overcome the upward force of the at least one tensioning member 23. In a preferred embodiment of the support system 100 forming a footrest, the user may even operate the button entirely by foot to lower or heighten the platform. Most preferably, the button is placed in the middle of a footrest, so that the user may rest their feet at either sides of the button. In other or further embodiments, the operating member 50 may also be placed elsewhere, e.g. on the edge of the platform, on the base, et cetera. Also other types of operating members may be envisaged, such as a lever or switch configured to operate the clamping mechanism 40.

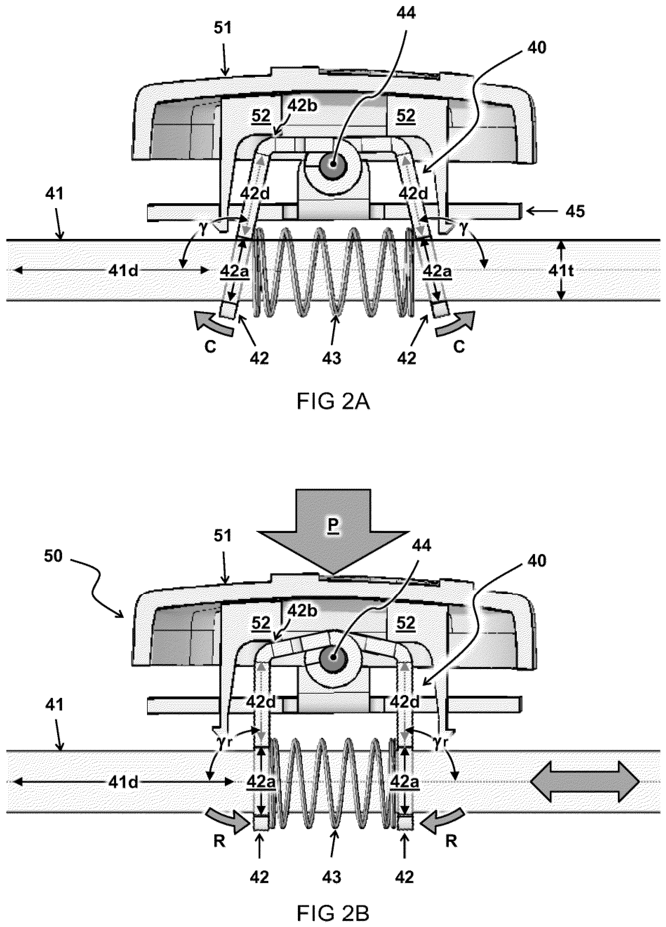

FIGs 2A and 2B illustrate operation of a preferred clamping mechanism 40. The clamping mechanism 40 is configured to controllably switch between at least a clamping configuration "C" (as shown in FIG 2A), and a release configuration "R" (as shown in FIG 2B).

In the clamping configuration "C", at least one clamping member 42 clamps onto the elongate adjustment member 41 for preventing movement of the elongate adjustment member 41 through the respective aperture 42a thereby fixating the moveable portion 21u,22l for fixating the adjustable height Z of the scissor structure 20. In the release configuration "R", each clamping member 42 releases clamping of the elongate adjustment member 41 for allowing movement of the elongate adjustment member 41 passing through the respective aperture 42a thereby allowing the moveable portion 21u,22l to move for changing the adjustable height Z of the scissor structure 20.

Preferably, the at least one clamping member 42 pivotably connected via a respective hinge axis 44 to a mounting plate 45. Each respective clamping member 42 has a respective aperture 42a guiding the elongate adjustment member 41 there through. Opposing clamping edges of the respective aperture 42a are formed by the respective clamping member 42 on respective opposing sides of the elongate adjustment member 41 guided through the respective aperture 42a. A clearance between each of the opposing clamping edges of the respective aperture 42a and the respective opposing sides of the elongate adjustment member 41 may be determined by a clamping member angle "y". For example, as shown in FIG 2A, the clamping member angle "y" may be defined as an angle between the length direction 41d of the elongate adjustment member 41 and a cross-section direction 42d of the aperture 42a, spanned by the opposing clamping edges of the aperture 42a. Of course also other angles may be defined.

In some embodiments, e.g. as shown in FIG 2B, pivoting the respective clamping member 42 towards a perpendicular angle "yr" (at which the cross-section direction 42d of the aperture 42a is perpendicular to the length direction 41d of the elongate adjustment member 41) may increase the clearance between the opposing clamping edges and the respective opposing sides of the elongate adjustment member 41. This may be used for releasing (R) the elongate adjustment member 41 from clamping and/or allowing the elongate adjustment member 41 to slide through the aperture 42a. In other or further embodiments, e.g. as shown in FIG 2A, pivoting the respective clamping member 42 away from the perpendicular angle "yr" decreases the clearance between the opposing clamping edges and the respective opposing sides of the elongate adjustment member 41 until the opposing clamping edges engage with the respective opposing sides of the elongate adjustment member 41 for fixating , by clamping "C", the elongate adjustment member 41.

As will be appreciated, the clamping mechanism may be selfsustaining. Once the opposing clamping edges engage with the respective opposing sides of the elongate adjustment member 41, any further movement or force of the elongate adjustment member 41 in the same direction that causes the respective clamping member 42 to pivot away from the perpendicular angle "yr" may further increase the clamping force on the elongate adjustment member 41, thus preventing said further movement of the elongate adjustment member 41 in that direction.

In a preferred embodiment, the elongate adjustment member 41 is formed by a smooth elongate rod. It will be appreciated that the selfsustaining and/or self-reinforcing clamping mechanism 40, as described herein, may be sufficiently strong to hold the elongate adjustment member 41 even if it is formed as a relatively smooth rod, e.g. without notches, protrusions, or other gripping structures along its surface. This may provide a relatively smooth and/or continuous stepless height adjustment. Alternatively, the elongate adjustment member 41 may be provided with notches or protruding structures, e.g. applied periodically along the length direction 41d of the elongate adjustment member 41, to further improve grip, although at the cost of continuous height adjustment. The smooth or structured elongate adjustment member 41 is preferably formed of a metal, such as stainless steel, to withstand relatively large clamping forces while resisting deformation and/or damage to its surface.

In principle, it may suffice to provide the clamping mechanism 40 with a single clamping member configured to fixate the elongate adjustment member 41 in one direction. For example, the single clamping member may fixate the elongate adjustment member 41 in the direction in which it tends to move when the platform 30 is lowered (e.g. due to a gravitational force acting on the platform 30). In this way the support system 100 may support an external load L placed on the platform 30 that causes a force in the downward direction. Movement of the elongate adjustment member 41 through the aperture 42a in the opposite direction may still be allow freely raising of the platform 30, as desired.

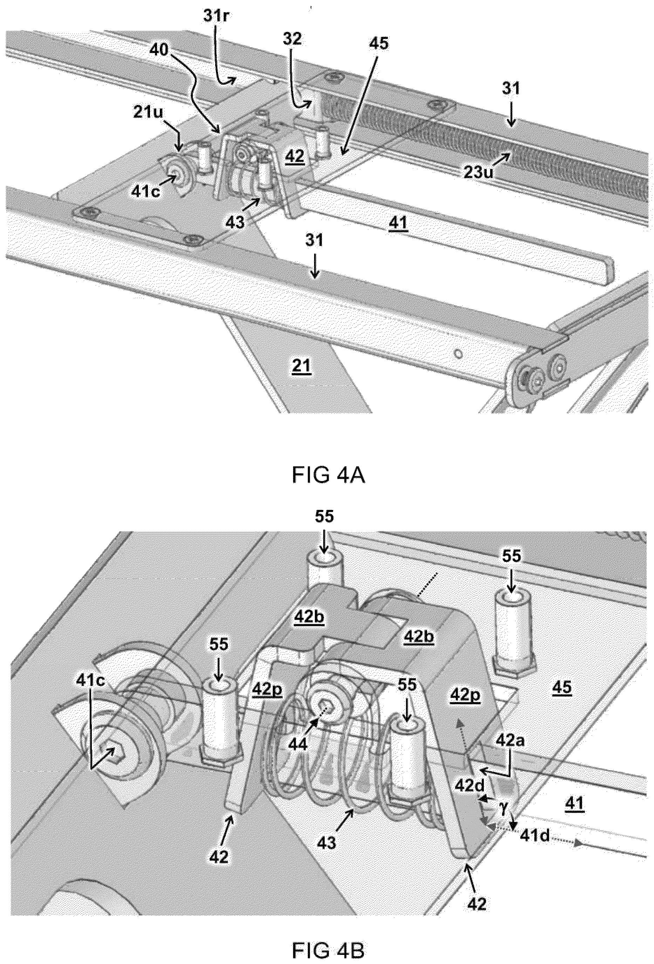

In a preferred embodiment, e.g. as shown, the clamping mechanism 40 comprises a first clamping member and a second clamping member. The first clamping member is configured to clamp down on the elongate adjustment member 41 by pivoting away from the perpendicular angle "yr" in a first direction, preventing the elongate adjustment member 41 to move through the respective aperture 42a of the first clamping member in the first direction. The second clamping member is configured to clamp down on the elongate adjustment member 41 by pivoting away from the perpendicular angle "yr" in a second direction, which is preferably opposite the first direction, preventing the elongate adjustment member 41 to move through the respective aperture 42a of the second clamping member in the second direction. In this way, the clamping mechanism may effectuate self-sustained clamping in two directions, e.g. preventing unintended lowering and raising of the platform. Most preferably, the first and second clamping members 42 are each pivotably connected via the same hinge axis 44 to the mounting plate 45. For example, the first and second clamping members 42 may hinge and/or clamp the elongate adjustment member 41 in opposite directions, as shown. Advantageously, as best seen in FIG 4B, both clamping members 42 sharing the same hinge axis 44, may rotate in unison, e.g. a few degrees, relative to the elongate adjustment member 41. This may facilitate that the apertures 42a can remain optimally aligned with the elongate adjustment member 41 even as its angle may change slightly, e.g. during actuation of the clamping mechanism 40 and/or during scissor-arm movement, thereby providing a robust and reliable locking action over the entire adjustment range.

In some embodiments, an operating member 50 is provided. As shown in FIG 2B, the operating member 50 may be operable by user interaction (e.g. downward force "P") to actuate pivoting of the at least one clamping member 42 away from the perpendicular angle "yr" to control release R of the clamping mechanism 40. In the embodiment shown, the operating member 50 has a user operable element 51 connected to an actuating structure 52. The actuating structure 52 is configured to engage an abutments surface 42b of the at least one clamping member 42. This may cause the at least one clamping member 42 to pivot about the respective hinge axis 44 towards the perpendicular angle "yr". In this way, the clamping mechanism 40 may release the elongate adjustment member 41 passing through the respective aperture 42a.

In some embodiments, e.g. as shown, the abutments surface 42b of the at least one clamping member 42 is oriented at an angle with respect to the cross-section direction 42d of the aperture 42a. For example, the angle between the at least one clamping member 42 is oriented at an angle between ninety and one hundred twenty degrees with respect to the cross-section direction 42d of the aperture 42a. Most preferably this angle is such that the abutments surface 42b directly faces an opposing surface of the actuating structure 52 when the respective clamping member 42 is oriented in the clamping configuration. For example, as shown in FIG 2A, the angle between the at least one clamping member 42 and the cross-section direction 42d of the aperture 42a may be the same or similar as the clamping member angle "y" of the clamping mechanism 40 with respect to the length direction 41d of the elongate adjustment member 41 in the clamping configuration.

In the embodiment shown, the operating member 50 is configured as a push button or knob which may be pushed down by user interaction P to release the clamping mechanism 40. While this provides a particularly elegant solution, in principle also other variations of the operating member 50 can be envisaged, such as a lever or switch configured to directly or indirectly actuate one or more clamping members 42. In a preferred embodiment, a clamp biasing member 43 is arranged to bias the clamping mechanism 40 towards the clamping configuration "C". For example, the clamp biasing member 43 is configured to bias pivoting of the at least one clamping member 42 away from the perpendicular angle "yr" for clamping (C) the elongate adjustment member 41 in the absence of said user interaction (P). Preferably, a single clamp biasing member 43, such as a compressed spring, is arranged between the first and second clamping member 42 configured to push the pivoting clamping members apart to opposite sides, both away from the perpendicular angle "yr". Advantageously, the clamp biasing member 43 embodied as a spring may be wrapped around the elongate adjustment member 41. Also other variations may be envisaged, such as reversing the angles of the clamping members, combined with clamp biasing member 43 that pulls the clamping members together. The respective clamping members 42 may also be biased by separate clamp biasing members 43. Also a single clamping member 42 may be biased by a single clamp biasing member 43.

Typically, an angle of the at least one clamping member 42 may be configured to reorient within an angular range between the (maximum) release configuration "R" and the clamping configuration "C". In the maximum release configuration "R" (as shown in FIG 2B) the cross-section direction 42d of the aperture 42a is perpendicular to the length direction 41d of the elongate adjustment member 41. In the clamping configuration "C" (as shown in FIG 2A), the opposing clamping edges of the aperture 42a engage with the respective opposing sides of the elongate adjustment member 41. Preferably, said angular range is relatively low, e.g. less than thirty degrees plane angle, preferably less than twenty degrees, more preferably less than fifteen degrees. The lower the angular range between the release configuration and the clamping configuration the more readily the clamping mechanism 40 will clamp down on the elongate adjustment member 41 while minimizing uncontrolled free movement of the adjustment member 41 through the aperture 42a. Accordingly, the height of the platform 30 may be immediately fixated when releasing the operating member 51 resulting in a highly responsive control mechanism.

Typically, the angular range may depend on a size of the aperture 42a relative to the size of the elongate adjustment member 41, in particular the cross-section distance "Da" (not indicated in the figure) between the opposing clamping edges of the aperture 42a and the cross-section distance "Dm" (not indicated in the figure) between the opposing sides of the elongate adjustment member 41 (in the thickness direction perpendicular to the length direction 41d). The less margin between "Da" and "Dm", the smaller the angular range. For example, "Da" is less than 110% of "Dm", preferably less than 105% of "Dm", e.g. down to 101% of "Dm". Similarly, the maximum clearance between each of the opposing clamping edges of the respective aperture 42a and the respective opposing sides of the elongate adjustment member 41 may be relatively low, e.g. less than two millimeter, or even less than one millimeter. The smaller this distance, the quicker the clamping mechanism may react to release of the operating member 50.

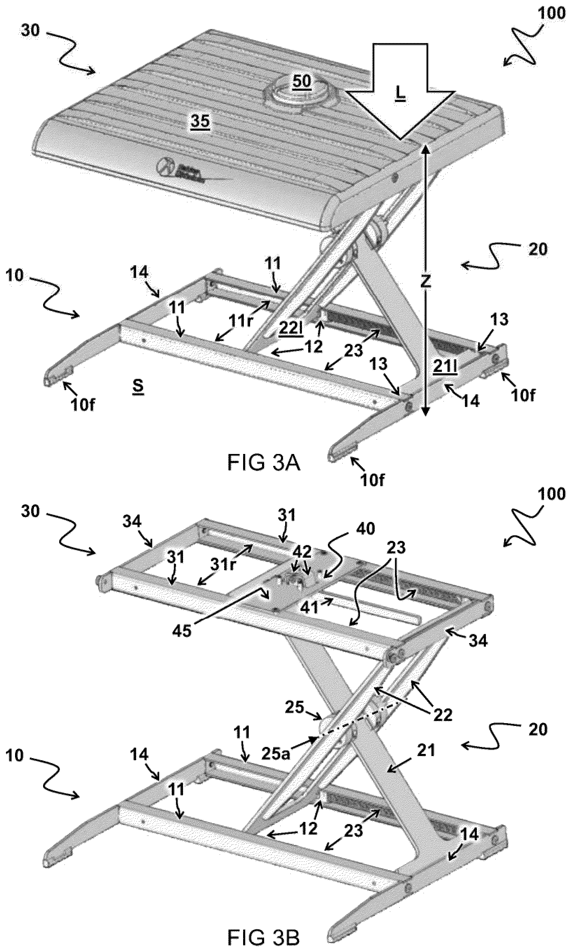

FIGs 3A and 3B illustrate further aspects of the support system 100.

In some embodiments, the support system 100 is part of a footrest, wherein the platform 30 comprises a footplate 35. Typically the footplate may comprise a material and/or profile to support a user's feet and/or prevent the feet from slipping off the footplate 35. In a preferred embodiment, an operating member 50 for operating the clamping mechanism 40 is arranged on or through the footplate 35. This may allow a user to control the clamping mechanism 40 via the operating member 50 using a foot. Of course the operating member 50 may also be operated by hand. While the present figure illustrates an upper surface of the footplate 35 being arranged substantially horizontal, the upper surface and/or footplate 35 may also be arranged at an angle, e.g. for a user resting their feet at angle.

In some embodiments, the first pivotable arm 21 and the second pivotable arm 22 are connected to each other via a central hinge 25 for mutual pivoting about a central hinge axis 25a perpendicular to the first and second pivotable arms 21,22. Preferably, the central hinge 25 has at least one hinge body forming a hinging connection between respective central portions of the first pivotable arm 21 and second pivotable arm 22. Most preferably, the hinge body is also configured to maintain a certain distance between the central portions of the pivotable arms. For example, this may alleviate the problem of a user getting pinched between the scissoring arms.

In some embodiments, e.g. as shown, the second pivotable arm 22 comprises two arm pieces, with a single arm piece of the first pivotable arm 21 arranged there between. In other or further embodiments, a pair of hinge bodies are arranged on either side of the single arm piece of the first pivotable arm 21, e.g. to maintain a certain distance to the arm pieces of the second pivotable arm 22 on either side. This may provide a relatively stable configuration. Of course, it can also be envisage to reverse the positions of the first pivotable arm 21 and second pivotable arm 22, e.g. with the first pivotable arm 21 having two arm pieces and the second pivotable arm 22 consisting of one arm piece there between. Of course it can also be envisaged both the first pivotable arm 21 and the second pivotable arm 22 consist of only one arm piece in a more symmetric configuration. Also other variations may be envisaged wherein the first pivotable arm 21 and/or second pivotable arm 22 each consists of one, two, or more arm pieces, e.g. in interwoven configuration.

In some embodiments, the platform 30 comprises two upper guidance structures 31. In the embodiment shown, each upper guidance structure 31 comprises a linear guidance 11r, e.g. rail structure, configured to guide a respective moveable upper end portion (not visible here) along a linear path. In other or further embodiments, the base 10 comprises two lower guidance structure 11. In the embodiment shown, each lower guidance structure 11 comprises a linear guidance 11r, e.g. rail structure, configured to guide a respective moveable lower end portion 22l along a linear path. Typically, each the linear guidance structures 31r and 11r are arranged parallel to each other. In principle, also other guidance paths and/or orientations may be envisaged insofar as allowed by the scissor structure 20. Alternatively, or in addition to the guidance rails 31r and 11r, also other guidance structures may be envisaged such as guidance rods.

In some embodiments, the platform 30 comprises at least one upper cross-connecting structure 34 configured to interconnect the two upper guidance structures 31. Preferably, at least two upper cross-connecting structures 34 are formed by respective crossbars which are spaced apart. For example, the footplate 35 or other upper platform structure may be connected on top of the upper guidance structures 31 and/or crossbars. In other or further embodiments, e.g. as shown, a mounting plate 45 is connected between the upper guidance structures 31. For example, the clamping mechanism 40 may be mounted to the mounting plate 45 to provide a fixed position on the platform 30.

In other or further embodiments, the base 10 comprises at least one lower cross-connecting structure 14 configured to interconnect the two lower guidance structures 11. Preferably, at least two lower cross-connecting structures 14 are formed by respective crossbars which are spaced apart. In one embodiment, e.g. as shown, the cross-connecting structures 14 may extend beyond the respective lower guidance structure 11. Preferably, the base 10 is provided with support feet 10f, e.g. arranged on the bottom of the lower cross-connecting structure 14 and/or on the bottom of the lower guidance structures 11 (not shown). For example, the support feet 10f may comprise an anti-slip material, such as rubber, to prevent the base 10 sliding on the support surface "S", e.g. floor or table.

FIGs 4A and 4B illustrate further details of the support system 100 and clamping mechanism 40, which have also been described with reference to the preceding figures. In FIGs 4A and 4B, the mounting plate 45 is drawn transparent to better show underlying structures. In FIG 4B also the elongate adjustment member 41 is drawn transparent to better show the respective aperture 42a in the respective clamping member 42. In reality, the mounting plate 45 and/or elongate adjustment member 41 may typically be formed of metal.

As best illustrated in the perspective view of FIG 4B, the respective clamping member(s) 42, preferably, each comprises a pivotable plate structure 42p, which forms the respective aperture 42a guiding the elongate adjustment member 41 there through. Accordingly, the cross-section direction 42d of the respective aperture 42a may be oriented along a surface direction of the pivotable plate structure 42p, and the surface direction of the pivotable plate structure 42p may be arranged at the clamping member angle "y" with respect to the length direction 41d of the elongate adjustment member 41. While the present figures show a preferred embodiment of the elongate adjustment member 41 having a rectangular cross-section, also other cross-sections may be used such as square or round (circular or elliptical).

In the embodiment shown, a set of button guidance structures 55 are provided, which may guide the up and down movement of the operating member 50, e.g. as shown in FIGs 2A and 2B. In principle, these structures could also be omitted, or other types of guidance may be provided for the operating member 50.

For the purpose of clarity and a concise description, features are described herein as part of the same or separate embodiments, however, it will be appreciated that the scope of the invention may include embodiments having combinations of all or some of the features described. For example, while embodiments were shown for the support system embodied as a footrest, various aspects of the support system may be used to support other loads. The various elements of the embodiments as discussed and shown offer certain advantages, such as improved operability and ergonomics. Of course, it is to be appreciated that any one of the above embodiments or processes may be combined with one or more other embodiments or processes to provide even further improvements in finding and matching designs and advantages.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A support system (100) comprising:
a base (10) configured to be placed on an external surface (S);
a platform (30) configured to support an external load (L); and
a scissor structure (20) configured to support the platform (30) with the external load (L) at an adjustable height (Z) above the base (10);
wherein the scissor structure (20) comprises a first pivotable arm (21) which has a stationary lower end portion (21l) pivotably mounted to a stationary lower hinge (13) on the base (10), and a moveable upper end portion (21u) pivotably mounted to an upper guided element (32) which is moveable along a guidance direction (31d) of an upper guidance structure (31) on the platform (30);
wherein the scissor structure (20) comprises a second pivotable arm (22) which has a stationary upper end portion (22u) pivotably mounted to a stationary upper hinge (33) on the platform (30), and a moveable lower end portion (22l) pivotably mounted to a lower guided element (12) which is moveable along a guidance direction (11d) of a lower guidance structure (11) on the base (10);
a clamping mechanism (40) configured to controllably fixate the adjustable height (Z) by controllably clamping onto an elongate adjustment member (41) connected to a moveable portion (21u,22l) of the scissor structure (20).

2. The support system (100) according to the preceding claim, wherein the clamping mechanism (40) comprises at least one clamping member (42) forming a respective aperture (42a);
wherein the elongate adjustment member (41) is guided along its length direction (41d) through the respective aperture (42a); and
the at least one respective clamping member (42) is configured to allow or prevent passage of the elongate adjustment member (41) through the respective aperture (42a) by controllably clamping onto the elongate adjustment member (41).

3. The support system (100) according to the preceding claim, wherein the clamping mechanism (40) is configured to controllably switch between
a clamping configuration (C), wherein the at least one clamping member (42) clamps onto the elongate adjustment member (41) for preventing movement of the elongate adjustment member (41) through the respective aperture (42a) thereby fixating the moveable portion (21u,22l) for fixating the adjustable height (Z) of the scissor structure (20); or
a release configuration (R), wherein each clamping member (42) releases clamping of the elongate adjustment member (41) for allowing movement of the elongate adjustment member (41) passing through the respective aperture (42a) thereby allowing the moveable portion (21u,22l) to move for changing the adjustable height (Z) of the scissor structure (20).

4. The support system (100) according to the preceding claim, wherein the at least one clamping member (42) is pivotably connected via a respective hinge axis (44) to a mounting plate (45),
wherein each respective clamping member (42) has a respective aperture (42a) guiding the elongate adjustment member (41) there through;
wherein, opposing clamping edges of the respective aperture (42a) are formed by the respective clamping member (42) on respective opposing sides of the elongate adjustment member (41) guided through the respective aperture (42a);
wherein a clearance between each of the opposing clamping edges of the respective aperture (42a) and the respective opposing sides of the elongate adjustment member (41) is determined by a clamping member angle (y) defined as an angle between the length direction (41d) of the elongate adjustment member (41) and a cross-section direction (42d) of the aperture (42a), spanned by the opposing clamping edges of the aperture (42a);
wherein pivoting the respective clamping member (42) towards a perpendicular angle (yr), at which the cross-section direction (42d) of the aperture (42a) is perpendicular to the length direction (41d) of the elongate adjustment member (41), increases the clearance between the opposing clamping edges and the respective opposing sides of the elongate adjustment member (41) for releasing (R) the elongate adjustment member (41) from clamping and allowing the elongate adjustment member (41) to slide through the aperture (42a);
wherein pivoting the respective clamping member (42) away from the perpendicular angle (yr) decreases the clearance between the opposing clamping edges and the respective opposing sides of the elongate adjustment member (41) until the opposing clamping edges engage with the respective opposing sides of the elongate adjustment member (41) for fixating the elongate adjustment member (41).

5. The support system (100) according to the preceding claim, wherein the clamping mechanism (40) comprises a first clamping member and a second clamping member;
wherein the first clamping member is configured to clamp down on the elongate adjustment member (41) by pivoting away from the perpendicular angle (yr) in a first direction, preventing the elongate adjustment member (41) to move through the respective aperture (42a) of the first clamping member in the first direction;
wherein the second clamping member is configured to clamp down on the elongate adjustment member (41) by pivoting away from the perpendicular angle (yr) in a second direction, opposite the first direction, preventing the elongate adjustment member (41) to move through the respective aperture (42a) of the second clamping member in the second direction.

6. The support system (100) according to the preceding claim, comprising a clamp biasing member (43) configured to bias the clamping mechanism (40) towards the clamping configuration (C), wherein the clamp biasing member (43) is configured to bias pivoting of the clamping members (42) away from the perpendicular angle (yr) for clamping (C) the elongate adjustment member (41) in the absence of user interaction (P).

7. The support system (100) according to the preceding claim, wherein a respective angle of the respective clamping members (42) is configured to reorient within an angular range between
the release configuration (R), wherein the cross-section direction (42d) of the aperture (42a) is perpendicular to the length direction (41d) of the elongate adjustment member (41) and
the clamping configuration (C) wherein the opposing clamping edges of the aperture (42a) engage with the respective opposing sides of the elongate adjustment member (41),
wherein the angular range is less than fifteen degrees.

8. The support system (100) according to the preceding claim, comprising an operating member (50) operable by user interaction (P) to actuate pivoting of the at least one clamping member (42) away from the perpendicular angle (yr) to control release (R) of the clamping mechanism (42).

9. The support system (100) according to the preceding claim, wherein the operating member (50) has a user operable element (51) connected to an actuating structure (52), wherein the actuating structure (52) is configured to engage an abutments surface (42b) of the at least one clamping member (42), thereby causing the at least one clamping member (42) to pivot about the respective hinge axis (44) towards the perpendicular angle (yr).

10. The support system (100) according to any of the preceding claims, wherein the elongate adjustment member (41) is formed by a smooth elongate rod without notches, protrusions, or other gripping structures for engagement by the clamping mechanism (40).

11. The support system (100) according to any of the preceding claims, wherein the elongate adjustment member (41) has a connected end (41c) and a free end (41f), wherein the connected end (41c) of the elongate adjustment member (41) is pivotably mounted to the moveable portion (21u,22l) of the scissor structure (20).

12. The support system (100) according to the preceding claim, wherein the connected end (41c) of the elongate adjustment member (41) is pivotably mounted to one of the moveable upper end portion (21u) of the first pivotable arm (21), or the moveable lower end portion (22l) of the second pivotable arm (22) , wherein the connected end (41c) of the elongate adjustment member (41) is configured to move, with the respective guided element (32,12) corresponding to the moveable end portion (21u,22l) to which the connected end (41c) is connected, along the respective guidance direction (31d,11d).

13. The support system (100) according to any of the preceding claims, wherein the clamping mechanism (40) is fixated to the platform (30) and the elongate adjustment member (41) is connected to the moveable upper end portion (21u) of the first pivotable arm (21).

14. The support system (100) according to any of the preceding claims, comprising at least one tensioning member (23) configured to bias upward movement of the platform (30) away from the base (10) while the clamping mechanism (40) is maintained in the release configuration (R);
wherein an operating member (50), formed as a button, is arranged on top of the platform (30) and configured to control operation of the clamping mechanism (40),
wherein the clamping mechanism (40) is configured to release clamping when the button is being actively pushed (P) by at least a minimum downward operating force,
wherein the clamping mechanism (40) is biased to reengage clamping when the button is released,
wherein the at least one tensioning member (23) is configured to exert a greater upward force on the platform (30) than the minimum downward operating force required to release the clamping mechanism (40).

15. A footrest comprising the support system (100) according to any of the preceding claims, wherein the platform (30) comprises a footplate (35) comprising a material and/or profile to support a user's feet and/or prevent the user's feet from slipping off the footplate (35), wherein a foot-operable knob is arranged centrally on the footplate (35) for controlling the clamping mechanism (40) and enabling height adjustment of the platform (30) by the user's feet in both downward and upward directions.
